(19) Europäisches Patentamt
European Patent Office
Office européen des brevets

(11) Publication number: **0 147 594**
**B1**

# (12) EUROPEAN PATENT SPECIFICATION

(45) Date of publication of patent specification: **15.02.89**

(51) Int. Cl.$^4$: **C 08 K 7/08**, C 08 L 27/12

(21) Application number: **84113708.6**

(22) Date of filing: **13.11.84**

## (54) Melt-moldable fluorine-containing resin composition.

(30) Priority: **22.12.83 JP 243147/83**

(43) Date of publication of application:
**10.07.85 Bulletin 85/28**

(45) Publication of the grant of the patent:
**15.02.89 Bulletin 89/07**

(84) Designated Contracting States:
**DE FR GB IT**

(56) References cited:
**US-A-3 879 044**

**CHEMICAL ABSTRACTS, vol. 101, no. 6, 6th August 1984, p. 78, no. 39961t, Columbus, OH (US)**

**CHEMICAL ABSTRACTS, vol. 99, no. 2, 11th July 1983, p. 40, no. 6639f, Columbus, OH (US)**

(73) Proprietor: **Otsuka Kagaku Kabushiki Kaisha**
**10, Bungo-machi Higashi-ku**
**Osaka-shi Osaka-fu (JP)**

(72) Inventor: **Tasaka, Takeo**
**649-2, Aza-Hanamen Satoura Satoura-cho**
**Naruto-shi Tokushima-ken (JP)**
Inventor: **Kawaguchi, Akiyoshi**
**649-2, Aza-Hanamen Satoura Satoura-cho**
**Naruto-shi Tokushima-ken (JP)**
Inventor: **Tsujikawa, Yozaburo**
**649-2, Aza-Hanamen Satoura Satoura-cho**
**Naruto-shi Tokushima-ken (JP)**

(74) Representative: **Patentanwälte Dr. Solf & Zapf**
**Zeppelinstrasse 53**
**D-8000 München 80 (DE)**

**EP 0 147 594 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

**Description**

This invention relates to a melt-moldable fluorine-containing resin composition which comprises at least one fluorine-containing resin and potassium titanate fibers in an amount of 5 to 40% by weight based on the total amount of the fibers and the resin, the resin composition having excellent properties, in particular excellent resistance to creep, excellent mechanical properties, a small shrinkage and gives a molded product having a very good appearance due to an excellent surface-smoothness and gloss.

A fluorine-containing resin is a synthetic high molecular compound which contains fluorine atom in the molecule. A typical resin is polytetrafluoroethylene. The flourine-containing resin has excellent resistances to heat, chemicals and weather as well as non-tacking and low abrasion properties compared with other high molecular resins.

However, most of the fluorine-containing resins have high melting points and have a necessity to be highly increased in molecular weight to obtain practical excellent properties, rendering the resin very high in melt viscosity. Thus, it is quite difficult to subject the resin to melt molding with adding to the resin glass fiber, carbon fiber and like reinforcing fiber.

In particular, it is impossible to mold the above reinforced resin into parts having a very small thickness. Accordingly, the fluorine-containing resin is generally molded without reinforcing fiber into parts such as a valve and tool for preparing a semi-conductor.

However, the use of fluorine-containing resins in natural, namely without use of any additive, results in the following disadvantages:

1) Shrinkage is large on shaping;

2) The flourine-containing resin is low in mechanical strength compared with other engineering plastics. Thus, it is necessary to mold the resin into mechanical parts having large thickness in despite of very expensive cost of the resin. Alternatively, the molded parts must be reinforced by use of rib or the like, hence uneconomical;

3) The fluorine-containing resin is excellent in heat resistance and usually used at a high temperature of 100 to 200°C, but is insufficient in creep resistance;

4) Although small in abrasion coefficient, abrasion resistance is low.

This is also valid for the fluorine-containing resins disclosed in JP—A—58-198 573 (Chemical Abstracts 101(6/8—84), page 78, No. 39961t) and US—A—3 879 044.

The former one relates to a coating material containing a fluorine-containing resin and potassium titanate fibers. The fluorine-containing resin is used in the form of a dispersion, emulsion or enamel and is unsuited for melt-molding.

The latter one relates to a fluoro-elastomer sealant containing therein non-woven radially oriented fibers such as fibrous potassium titanate and acicular rutile. The fluoroelastomers described therein contain 40 to 55 wt% of hexafluoropropylene, tetrafluoroethylene or like fluoroolefin and no more than 60 wt% of vinylidene fluoride in its examples in order to use for a sealant such as O-ring. However, the fluoroelastomers described therein cannot be melt-molded and cannot be shaped by injection molding, extrusion, transfer molding.

The object of the present invention is to provide a fluorine-containing resin-composition which can be melt-molded into complicated or small, thin-walled parts having a small shrinkage, excellent mechanical properties and resistance to creep and which gives a molded product having a very good appearance due to an excellent surface-smoothness and gloss.

This object of the invention can be achieved by a melt-moldable fluorine-containing resin composition which comprises 1 to 40% by weight of potassium titanate fibers and at least one fluorine-containing resin, the melt-moldable fluorine-containing resin composition being characterized in that the fluorine-containing resin is selected from poly(chlorotrifluoroethylene), chlorotrifluoroethylene - ethylene copolymer, tetrafluoroethylene - ethylene copolymer, polyvinylidene fluoride, copolymer of tetrafluoroethylene and a copolymerizable monomer (a), the copolymerizable monomer (a) being selected from a fluoro-olefin of the formula

$$XCF_2(CF_2)_mCF{=}CF_2 \qquad (I)$$

a fluorovinyl ether of the formula

$$XCF_2(CF_2)_nOCF{=}CF_2 \qquad (II)$$

a perfluoroalkyl vinyl ether of the formulae

$$XCF_2(CF_2)_nO\underset{|}{\overset{CF_3}{C}}FCF_2OCF{=}CF_2 \qquad (III)$$

and

$$Y{-}CF_2CF_2O\overset{CF_3}{\underset{|}{C}}FCF_2OCF{=}CF_2 \qquad (IV)$$

a perfluoroallyloxy compound of the formula

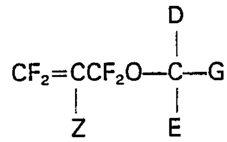

(V)

wherein

X is F or H,

m is 0 to 9,

n is 0 to 7,

Y is Cl, $-SO_2F$, $-COF$, $-CO_2H$, $-CO_2R^1$, $-CF_2CO_2R^1$ or $-(CF_2)_xR^1$, $R^1$ being F or $CF_3$ and x being 1 to 6,

Z is Cl or F,

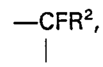

D is $-CF_2R^2$ or $CF_3$, $R^2$ being F, Cl, $-SO_2F$, $-COF$, $-CO_2H$, $-CO_2R^1$, $-CF_2CO_2R^1$ or $(CF_2)_xR^1$,

E is F, $-CF_3$, $-CF_2CO_2R^1$ or $-CF_2Cl$ and G is F or $CF_3$,

and copolymer of vinylidene fluoride and a copolymerizable monomer (b), containing at least 90 mole% of vinylidene fluoride, the copolymerizable monomer (b) selected from tetrafluoroethylene, hexafluoropropylene, chlorotrifluoroethylene and vinyl fluoride.

The resin composition as defined above can be used for melt-molding and can be shaped by injection molding, extrusion and transfer molding. In particular, it can be melt-molded into complicated or small, thin-walled parts having a small shrinkage, excellent mechanical properties and resistance to creep and it gives a molded product having a very good appearance due to an excellent surface-smoothness and gloss.

According to a preferred embodiment of the present invention the potassium titanate fibers have an average fiber diameter of 0,1 to 2 µm, an average fiber length of 5 to 100 µm, and a ratio of average fiber length to average fiber diameter (aspect ratio) of 10 to 200.

The number average molecular weight of the fluorine-containing resin of the clamped composition preferably is in the range of $10^5$ to $10^7$.

According to a further preferred embodiment of the present invention the homopolymer and copolymer of vinylidene fluoride have a polymerization degree of $\eta_{inh}$ of 0,5 to 2,0.

Preferably, the potassium titanate fibers are potassium tetratitanate, potassium hexatitanate and/or potassium octatitanate fibers.

Examples of useful fluorine-containing resins are poly(chlorotrifluoroethylene) which is a homopolymer of chlorotrifluoroethylene, copolymers of tetrafluoroethylnee (hereinafter referred to as "TFE") and a copolymerizable monomer, homopolymer of vinylidene fluoride, copolymers of vinylidene fluoride and a copolymerizable monomer.

Typical examples of copolymers of TFE are as follows:

A copolymer of TFE and a fluoro-olefin of the formula

$$XCF_2(CF_2)_mCF=CF_2 \qquad (I)$$

wherein X is F or H, m is 0 to 9. Examples of the fluoro-olefins are hexafluoropropylene, and perfluoropentene-1. These fluoro-olefins are usually copolymerized in an amount of 5 to 30%. A typical example of the copolymer is TFE-hexafluoropropylene copolymer.

A copolymer of TFE and a fluorovinyl ether of the formula

$$XCF_2(CF_2)_nOCF=CF_2 \qquad (II)$$

wherein X is same as above, n is 0 to 7. Examples of the ethers are perfluoroethyl perfluorovinyl ether and perfluoropropyl perfluorovinyl ether.

A copolymer of TFE and a perfluoroalkyl vinyl ether, the ether being at least one compound selected from fluorovinyl polyether of the formula (III) and the isomers thereof of the formula (IV)

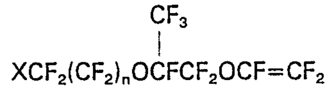

(III)

wherein X and n are same as above,

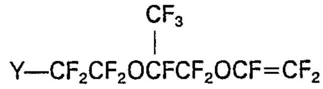

(IV)

wherein Y is Cl, $-SO_2F$, $-COF$, $-CO_2H$, $-CO_2R^1$, $-CF_2CO_2R^1$, $-(CF_2)_xR^1$, $R^1$ being F or $CF_3$, x is 1 to 6.

These ethers (III) and (IV) are usually copolymerized in an amount of several %.

A copolymer of TFE and a polyfluoroallyloxy compound of the formula

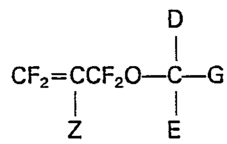

(V)

wherein Z is Cl or F, D is $-CF_2R^2$ or

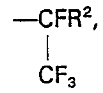

$R^2$ being F, Cl, $-SO_2F$, $-COF$, $-CO_2H$, $-CO_2R^1$, $-CF_2CO_2R^1$ or $-(CF_2)_xR^1$, $R^1$ and x are same as above, E is F, $-CF_3$, $-CF_2CO_2R^1$ or $-CF_2CL$, G is F or $-CF_3$. Examples of the compounds are perfluoro-3-(butoxy)propene and 1 - (1,1,1,2,3,3 - hexafluoro - 3 - chloro - 2 - propoxy)pentafluoro - 2 - propene. These compounds are usually copolymerized in an amount of about 0.1 to 55%, preferably 1 to 10%.

A copolymer of TFE or chlorotrifluoroethylene and 35 to 65 mole% of ethylene.

Vinylidene fluoride copolymer contains at least 90 mole% of vinylidene fluoride. Examples of useful monomers which are copolymerizable with vinylidene fluoride are TFE, hexafluoropropylene, chlorotrifluoroethylene and, vinyl fluoride.

A homopolymer and copolymer of vinylidene fluoride (hereinafter referred to as "vinylidene fluoride resin") have a polymerization degree which is indicated in terms of intrinsic viscosity ηinh of 0.5 to 2.0, preferably 0.8 to 1.5.

ηinh is represented by the following equation,

$$\eta inh = \frac{1}{c} \ln \left[\frac{\eta}{\eta o}\right]$$

wherein *c* is a concentration of a polymer in dimethylformamide (0.4 g/dl), η is a viscosity of a polymer in dimethylformamide and ηo is a viscosity of dimethylformamide, each measured at 30°C.

With ηinh of less than 0.5, the vinylidene fluoride resin is poor in mechanical property. While with ηinh of more than 2.0, moldability of the resin become poor due to a high melt viscosity, hence undesirable.

These fluorine-containing resins can be used which are prepared in any method such as suspension polymerization, emulsion polymerization, solution polymerization or bulk polymerization. These resins may be used in mixture of at least two of them according to a contemplated purpose.

The fluorine-containing resin has a number average molecular weight of preferably $10^5$ to $10^7$ and more preferably $10^5$ to $10^6$.

Potassium titanate fiber used in the invention is a single crystal represented by the formula

$$K_2O \cdot l(TiO_2) \text{ or } K_2O \cdot l(TiO_2) \cdot 1/2\ H_2O$$

wherein l is an integer of 2 to 8. Examples thereof are potassium tetratitanate fiber, potassium hexatitanate fiber and potassium octatitanate fiber, and these are used singly or in mixture. The titanate fiber has an average fiber diameter of preferably 0.1 to 2 μm, average fiber length of preferably 5 to 100 μm and a ratio of average fiber length to average fiber diameter (aspect ratio) of preferably 10 to 200. Among them, potassium hexatitanate fiber is most preferable for use in preparing tool for preparing a semi-conductor (wafer basket) which requires a very high resistance to chemicals.

In the invention, average fiber diameter and average fiber length of potassium titanate fiber are each average of values which were measured in at least 5 sights and at least 10 fibers in each sight, with use of a scanning-type electron microscope. An aspect ratio is a divisor of average fiber length by average fiber diameter.

With outside of the above ranges of average fiber diameter, average fiber length and aspect ratio, for example, more than 1 μm in average fiber diameter, less than 5 μm ion average fiber length, namely when aspect ratio is below 5 (less than 10), reinforcing effect is small, hence undesirable.

Further, fibers having an extremely small length of below 0.1 μm or having a long length of more than 100 μm are difficult to prepare industrially and have little practical use.

In general, potassium titanate fiber is added in an amount of 5 to 40% of total amounts of the fluorine-containing resin and the potassium titanate fiber. In case of TFE-hexafluoropropylene copolymer and TFE-perfluoroalkyl vinyl ether copolymer which are high in melt viscosity, potassium titanate fiber is added in preferably 5 to 30%, more preferably 10 to 30%. With less than 5%, reinforcing effect is low.

While, with more than 40%, properties are not so improved in proportion to the amount of fiber and molding is difficult due to high melt viscosity, hence undesirable.

Although potassium titanate fiber can be used as it is but is preferably surface-treated with silane coupling agent, titanate coupling agent, epoxy resin and epoxy-urethane resin to improve a wettability with the fluorine-containing resin.

The resin composition of the invention can be prepared by various methods, for example,

① a method in which potassium titanate fiber is added to a system of polymerization of tetrafluoroethylene or like monomer,

② a method in which potassium titanate fiber is added to the polymerization system in the middle of the polymerization, or to the take-out process of the polymer,

③ a method in which potassium titanate fiber is added to the fluorine-containing resin polymer, the mixture was extruded by use of an extruder, cooled and then cut to prepare pellets.

The third method is most practically employed.

To the resin composition of the invention may be added an additive such as hydroxide and carbonate of Ca, Ba, Zn and Mg and like heat-stabilizer, terephthalic acid, kaolin, talc, kieselguhr and like crystal growth promoting nucleus, tripropargyl cyanurate and like crosslinking agent, carbon black and like coloring agent in a range without affecting the effects of the present invention.

The resin composition of the invention is melt-moldable and can be shaped by injection molding, extrusion, transfer molding and like methods having excellent productivity.

Although the resin composition of the invention has incorporated therein, as a reinforcing agent, potassium titanate fiber which is about 1/10 to 1/100 in size compared with conventional glass fiber or carbon fiber, the mechanical property is extremely improved in the invention. Further, the resin composition can be molded into thin-wall parts by a simple method, and has an improved creep characteristics, thus having an excellent economical and practical values.

It was difficult to design a mold and to shape the fluorine-containing resin into minute parts due to a large molding shrinkage of the resin, but the shrinkage is lowered by the composition of the invention with the addition of potassium titanate fiber without affecting the moldability of the resin.

The resin composition can be molded into complicated or small, thin-wall parts, because the composition has an excellent dimensional accuracy due to a small anisotropy. The composition provides a molded product having a very good appearance due to the excellent surface-smoothness and gloss compared with those reinforced with glass fiber or carbon fiber. The invention also gives a molded product reinforced with potassium titanate fiber which hardly injures an other article in combination, because of a low Mohs hardness of the fiber of 4.

The resin composition of the invention has the above excellent characteristics which is not obtained in those reinforced with glass fiber or carbon fiber.

The resin composition of the invention has a wide use for injection molded articles such as a pump, valve, packing, tool for preparing semi-conductor, extrusion articles such as a tube, round rod, coated electric wire, transfer molded articles such as a large valve, large pump, blow molded thin-wall articles such as a bottle, container. The composition is also applied to a corrosion resistant lining or coating of a reactor or piping or adhesive.

The invention will be described in more detail with reference to Examples.

Examples 1 to 3 and Comparison Example 1

To pellets of ethylene-tetrafluoroethylene copolymer (Neoflon® ETFE EP-520, a product of Daikin Industries Ltd.) was added potassium titanate fiber treated with epoxy-silane (Tismo®-D102, average fiber diameter 0.3 μm, average fiber length 15 μm, a product of Otsuka Kagaku KK) in an amount of 5 to 40% based on the composition as listed in Table 1. The mixture was weighed, mixed uniformly and then melted in an extruder (45 mm, single axis) at a temperature of 300°C. The molten mixture was cooled with water and made into pellets. The pellets were injection molded at an injection temperature of 300°C, mold temperature of 120°C and injection pressure of 800 $kg/cm^2$ to prepare a test specimens. A test specimens for comparison was prepared in the same manner as above with use of pellets obtained without use of potassium titanate fiber. The following properties were measured with use of the specimens and the results were given in Table 1.

(Tensile strength)

Measured according to ASTM D638 with use of Type I specimens (3.2 mm thick). Distance between grips. 100 mm. Speed of testing: 10 mm/min.

(Bending strength and bending modulus)

Measured according to ASTM D790 with use of a Test specimens, 150 mm long, 13 mm wide and 6.4 mm height. Crosshead rate: 5 mm/min., support span: 100 mm.

(Molding shrinkage)

Shrinkage in longitudinal direction was measured with a micrometer by use of specimens for the tensile test (200 mm long by 3.2 mm thick).

(Heat distortion temperature, HDT)

Measured according to ASTM D648 with use of a Test specimens, 150 mm long by 6.4 mm wide by 13 mm height. Bending stress: 18.6 kg/$cm^2$, temperature elevation: 2°C/min.

TABLE 1

| | Example | | | Com. Ex. |
|---|---|---|---|---|
| | 1 | 2 | 3 | 1 |
| Content of fiber (%) | 5 | 20 | 40 | 0 |
| Tensile strength (kg/$cm^2$) | 480 | 680 | 830 | 380 |
| Bending strength (kg/$cm^2$) | 420 | 830 | 1,170 | 320 |
| Bending modulus (kg/$cm^2$) | 17,200 | 48,600 | 72,500 | 8,600 |
| Shrinkage (%) | 1.10 | 0.52 | 0.26 | 1.52 |
| HDT (°C) | 95 | 121 | 140 | 82 |

As apparent from Table 1, it is presumed that effect of potassium titanate fiber is small in an amount of less than 5%, which is clear from the results of content of 5 to 40%. While it is very difficult to prepare pellets by extrusion in an amount of more than 40%, hence impractical.

Examples 4 to 7 and Comparison Examples 2 to 4

Three kinds of pellets were prepared in the same manner as in Example 1 with the exception of using poly(chlorotrifluoroethylene) (Daiflon®CTFE M-300P, a product of Daikin Industries Ltd.), TFE-hexafluoropropylene copolymer (Neoflon® FEP NP-30, a product of Daikin Industries Ltd.) and TFE-perfluoroalkyl vinyl ether copolymer (Teflon® PFA 340J, a product of Mitsui Fluorochemical Co., Ltd.) in amounts listed in Table 2. A pellet was prepared for comparison without use of potassium titanate fiber. The injection molding was conducted in the same conditions as in Example 1 except that poly(chlorotrifluoroethylene) was injected at 260°C and each of TFE-hexafluoropropylene copolymer and TFE - perfluoroalkyl vinyl ether copolymer was injected at 360 to 380°C. The results were shown in Table 2.

TABLE 2

| | Example | | | | Com. Ex. | | |
|---|---|---|---|---|---|---|---|
| | 4 | 5 | 6 | 7 | 2 | 3 | 4 |
| Daiflon® CTFE (M-300 P) | 80 | — | — | — | 100 | — | — |
| Neoflon® FEP (NP-30) | — | 90 | — | — | — | 100 | — |
| Teflon® PFA (340J) | — | — | 93 | 85 | — | — | 100 |
| Tismo® D-102 | 20 | 10 | 7 | 15 | — | — | — |
| Tensile strength (kg/$cm^2$) | 660 | 360 | 360 | 450 | 370 | 250 | 280 |
| Bending strength (kg/$cm^2$) | 1,000 | 330 | 310 | 480 | 470 | 210 | 230 |
| Bending modulus (kg/$cm^2$) | 59,000 | 14,600 | 11,200 | 25,100 | 17,000 | 6,300 | 6,700 |
| Shrinkage (%) | 0.60 | 1.60 | 2.98 | 1.43 | 1.75 | 3.40 | 3.79 |
| HDT (°C) | — | — | 84 | 102 | — | — | 62 |

As apparent from Table 2, potassium titanate fiber exhibts an excellent reinforcing effect, lowers molding shrinkage and enhances dimensional accuracy in combination with poly(chlorotrifluoroethylene)

as well as polytetrafluoroethylene copolymer such as TFE - hexafluoropropylene copolymer and TFE-perfluoroalkyl vinyl ether copolymer.

Examples 8 to 12 and Comparison Example 5

To a powder of polyvinylidene fluoride (KF polymer® #1000, a product of Kureha Chemical Industry Co., Ltd., ηinh=1.00) was added potassium titanate fiber treated with epoxy-silane (Tismo®-D102, average fiber diameter 0.3 μm, average fiber length 15 μm, a product of Otsuka Kagaku KK) in an amount of 5 to 40% based on the composition as listed in Table 3. The mixture was weighed, mixed uniformly and then melted in an extruder (45 mm, single axis) at a temperature of 230°C. The molten mixture was cooled with water and made into pellets. The pellets were injection molded at an injection temperature of 220°C, mold temperature of 90°C and injection pressure of 800 kg/cm$^2$ to prepare test specimens. A test speicmens for comparison was prepared in the same manner as above with use of pellets obtained without use of potassium titanate fiber. The following properties were measured with use of the specimens and and the results were given in Table 3

(Tensile strength)

Measured according to JIS K7113 with use of Type I specimens (4 mm thick). Distance between grips: 100 mm, Speed of testing: 10 mm/min.

(Bending strength and bending modulus)

Measured according to JIS K7203 with use of a Test specimens, 185 mm long, 10 mm wide and 4 mm height. Crosshead rate: 5 mm/min., support span: 60 mm.

(Molding shrinkage and surface smoothness)

Shrinkage in longitudinal and latitudinal directions was measured with a micrometer by use of three sidegate samples 60 mm long by 50 mm wide by 3 mm height.

Surface smoothness was observed with the unaided eye.

TABLE 3

| | Example | | | | | Com. Ex. |
|---|---|---|---|---|---|---|
| | 8 | 9 | 10 | 11 | 12 | 5 |
| Content of fiber (%) | 5 | 10 | 20 | 30 | 40 | 0 |
| Tensile strength (kg/cm$^2$) | 700 | 850 | 1010 | 1110 | 1130 | 520 |
| Bending strength (kg/cm$^2$) | 1160 | 1440 | 1700 | 1870 | 1930 | 800 |
| Bending modulus (kg/cm$^2$) | 38000 | 58000 | 83000 | 93000 | 95000 | 21000 |
| HDT (°C) | 137 | 152 | 163 | 167 | 169 | 80 |
| Shrinkage (%) | | | | | | |
| longitudinal | 1.6 | 1.1 | 0.8 | 0.5 | 0.3 | 3.3 |
| latitudinal | 1.7 | 1.2 | 0.9 | 0.6 | 0.4 | 3.3 |
| Surface smoothness | Good | Good | Good | Good | Good | Good |

As apparent from Table 3, it is clear that potassium titanate fiber is effective in an amount of 5 to 40%. While it is difficult to improve properties in a great extent in an amount of more than 40%.

Comparison Examples 6 to 9

Four kinds of resin compositions were prepared in the same manner as in Examples 8 to 12 except that carbon fiber having an average fiber diameter of 12.5 μm and an averrage fiber length of 3 mm (Kureca chop®C-103, a product of Kuhera Chemical Industry Co., Ltd). was used in amounts of 5 to 30% as listed in Table 4 in place of potassium titanate fiber. Test specimens were also prepared in the same manner as in Examples 8 to 12 with use of the above compositions and properties thereof were measured. The results were given in Table 4.

TABLE 4

| | Com. Ex. | | | |
|---|---|---|---|---|
| | 6 | 7 | 8 | 9 |
| Content of carbon fiber (%) | 5 | 10 | 20 | 30 |
| Tensile strength ($kg/cm^2$) | 610 | 710 | 810 | 850 |
| Bending strength ($kg/cm^2$) | 1050 | 1160 | 1230 | 1310 |
| Bending modulus ($kg/cm^2$) | 28000 | 37000 | 44000 | 47000 |
| HDT (°C) | 152 | 161 | 169 | 170 |
| Shrinkage (%) | | | | |
| longitudinal | 1.4 | 1.0 | 0.6 | 0.4 |
| latitudinal | 2.2 | 1.6 | 1.1 | 0.8 |

It is apparent from Tables 3 and 4, the resin compositions of the invention exhibits a greater improvement in properties than those reinforced with carbon fiber. The composition of the invention is extremely low in anisotropy of molding shrinkage and thus the mold can be easily designed and the molded product has a small inner strain.

**Claims**

1. A melt-moldable fluorine-containing resin composition which comprises at least one fluorine-containing resin and potassium titanate fibers in an amount of 5 to 40% by weight based on the total amount of the fibers and the resin, characterized in that the fluorine-containing resin is selected from poly(chlorotrifluoroethylene), chlorotrifluoroethylene - ethylene copolymer, tetrafluoroethylene-ethylene copolymer, polyvinylidene fluoride, copolymer of tetrafluoroethylene and a copolymerizable monomer (a), the copolymerizable monomer (a) being selected from a fluoro-olefin of the formula

$$XCF_2(CF_2)_mCF{=}CF_2 \quad (I)$$

a fluorovinyl ether of the formula

$$XCF_2(CF_2)_nOCF{=}CF_2 \quad (II)$$

a perfluoroalkyl vinyl ether of the formulae

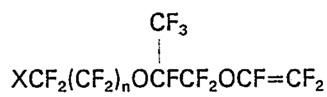

(III)

and

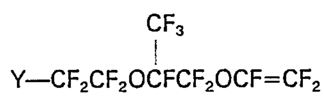

(IV)

a perfluoroallyloxy compound of the formula

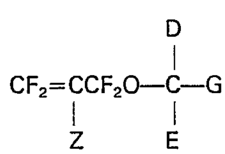

(V)

wherein
X is F or H,
m is 0 to 9,
n is 0 to 7,

Y is Cl, $-SO_2F$, $-COF$, $-CO_2H$, $-CO_2R^1$, $-CF_2CO_2R^1$ or $-(CF_2)_xR^1$, $R^1$ being F or $CF_3$ and x being 1 to 6,
Z is Cl or F,

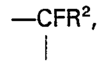

D is $-CF_2R^2$ or $CF_3$, $R^2$ being F, Cl, $-SO_2F$, $-COF$, $-CO_2H$, $-CO_2R^1$, $-CF_2CO_2R^1$ or $-(CF_2)_xR^1$,
E is F, $-CF_3$, $-CF_2CO_2R^1$ or $-CF_2Cl$ and G is F or $CF_3$,
and copolymer of vinylidene fluoride and a copolymerizable monomer (b), containing at least 90 mole% of vinylidene fluoride, the copolymerizable monomer (b) being selected from tetrafluoroethylene, hexafluoropropylene, chlorotrifluoroethylene and vinyl fluoride.

2. The composition as defined in claim 1 wherein the potassium titanate fibers have an average fiber diameter of 0,1 to 2 µm, an average fiber length of 5 to 100 µm, and a ratio of average fiber length to average fiber diameter (aspect ratio) of 10 to 200.

3. The composition as defined in claim 1 or 2 wherein the fluorine containing resin has a number average molecular weight of $10^5$ to $10^7$.

4. The composition as defined in claims 1—3 wherein the homopolymer and copolymer of vinylidene fluoride have a polymerisation degree of $\eta inh=0.5$ to 2.0.

5. The composition as defined in claims 1—4, wherein the potassium titanate fibers are potassium tetratitanate, potassium hexatitanate and/or potassium octatitanate fibers.

**Patentansprüche**

1. In der Schmelze formbare, Fluor enthaltende Harzzusammensetzung, enthaltend mindestens ein Fluor enthaltendes Harz und Kaliumtitanatfasern in einer Menge von 5 bis 40 Gew.-%, bezogen auf die Gesamtmenge von Fasern und Harz, dadurch gekennzeichnet, daß das Fluor enthaltende Harz ausgewählt wird aus Poly(chlorotrifluoroethylen), Chlorotrifluoroethylen - Ethylen - Copolymer, Tetrafluoroethylen - Ethylen - Copolymer, Polyvinylidenfluorid, Copolymer von Tetrafluoroethylen und einem copolymerisierbaren Monomeren (a), das ausgewählt wird aus einem Fluoroolefin der Formel

$$XCF_2(CF_2)_mCF=CF_2 \quad (I)$$

einem Fluorovinyläther der Formel

$$XCF_2(CF_2)_nOCF=CF_2 \quad (II)$$

einem Perfluoroalkylvinyläther der Formeln

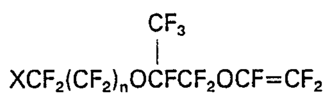

(III)

und

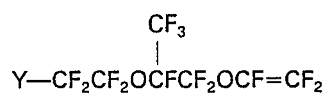

(IV)

einer Perfluoroallyloxyverbindung der Formel

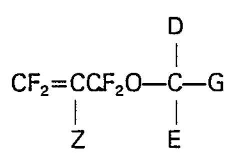

(V)

worin bedeuten:
X F oder H,
m 0 bis 9,
n 0 bis 7,
Y Cl, $-SO_2F$, $-COF$, $-CO_2H$, $-CO_2R^1$, $-CF_2CO_2R^1$ oder $-(CF_2)_xR^1$, worin $R^1$ für F oder $CF_3$ steht und x für 1 bis 6 steht,
Z Cl oder F,

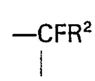

D —$CF_2R^2$ oder $CF_3$, worin $R^2$ steht für F, Cl, —$SO_2F$, —COF, —$CO_2H$, —$CO_2R^1$, —$CF_2CO_2R^1$ oder —$(CF_2)_xR^1$,

E F, —$CF_3$, —$CF_2CO_2R^1$ oder —$CF_2Cl$ und

G F oder $CG_3$,

und einem Copolymer von Vinylidenfluorid und einem copolymerisierbaren Monomeren (b), das mindestens 90 Mol-% Vinylidenfluorid enthält, wobei das copolymerisierbare Monomere (b) ausgewählt wird aus Tetrafluoroethylen, Hexafluoropropylen, Chlorotrifluoroethylen und Vinylfluorid.

2. Zusammensetzung nach Anspruch 1, worin die Kaliumtitanatfasern einem durchschnittlichen Faserdurchmesser von 0,1 bis 2 μm, eine durchschnittliche Faserlänge von 5 bis 100 μm und ein Verhältnis zwischen Faserlänge und durchschnittlichem Faserdurchmesser (Aspektverhältnis) von 10 bis 200 aufweisen.

3. Zusammensetzung nach Anspruch 1 oder 2, worin das Fluor enthaltende Harz ein zahlendurchschnittliches Molekulargewicht von $10^5$ bis $10^7$ hat.

4. Zusammensetzung nach den Ansprüchen 1 bis 3, worin das Homopolymer und Copolymer von Vinylidenfluorid einen Polymerisationsgrad $\eta_{inh}$ von 0,5 bis 2,0 aufweisen.

5. Zusammensetzung nach den Ansprüchen 2 bis 4, worin die Kaliumtitanatfasern Kaliumtetratitanat-, Kaliumhexatitanat und/oder Kaliumoctatitanat-Fasern sind.

**Revendications**

1. Composition de résine fluorée moulable à l'état fondu qui comprend au moins une résine fluorée et des fibres et titanate de potassium en une quantité de 5 à 40% en poids par rapport à la quantité totale des fibres et de la résine, caractérisée en ce que la résine fluorée est choisie parmi un poly(chlorotrifluoroéthylène), un copolymère de chlorotrifluoroéthylène-éthylène, un copolymère de tétrafluoroéthylène-éthylène, un fluorure de polyvinylidène, un copolymère de tétrafluoroéthylène et d'un monomère copolymérisable (a), le monomère copolymérisable (a) étant choisi parmi une fluoro-oléfine de formule

$$XCF_2(CF_2)_mCF{=}CF_2 \quad (I)$$

un éther fluorovinylique de formule

$$XCF_2(CF_2)_nOCF{=}CF_2 \quad (II)$$

un éther vinylique de perfluoroalcoyle de formule

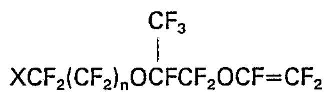

(III)

et

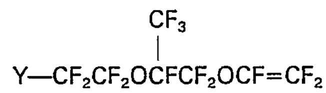

(IV)

un composé perfluoroallyloxy de formule

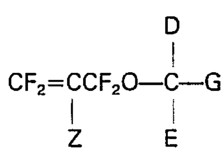

(V)

dans lesquelles:

X est F ou H,

m est 0 à 9,

n est 0 à 7,

Y est Cl, —$SO_2F$, —COF, —$CO_2H$, —$CO_2R^1$, —$CF_2CO_2R^1$ ou —$(CF_2)_xR^1$, $R^1$ étant F ou $CF_3$ et x étant 1 à 6,

Z est Cl ou F, —$CFR^2$,

D est —$CF_2R^2$ ou $CF_3$, $R^2$ étant F, Cl, —$SO_2F$, —COF, —$CO_2H$, —$CO_2R^1$, —$CF_2CO_2R^1$ ou —$(CF_2)_xR^1$,

E est F, —$CF_3$, —$CF_2CO_2R^1$ ou —$CF_2Cl$ et G est F ou $CF_3$, et un copolymère de fluorure de vinylidène et d'un monomère copolymérisable (b), contenant au moins 90% en moles de fluorure de vinylidène, le monomère copolymérisable (b) étant choisi parmi le tétrafluoroéthylène, l'hexafluoropropylène, le chlorotrifluoroéthylène et le fluorure de vinyle.

2. Composition suivant la revendication 1, caractérisée en ce que les fibres de titanate de potassium ont un diamètre de film moyen de 0,1 à 2 μm, une longueur de fibre moyenne de 5 à 100 μm et un rapport de longueur de fibre moyenne à diamètre de fibre moyen (rapport d'aspect) de 10 à 200.

3. Composition suivant la revendication 1 ou la revendication 2, caractérisée en ce que la résine fluorée à un poids moléculaire moyen en nombre de $10^5$ à $10^7$.

4. Composition suivant les revendications 1 à 3, caractérisée en ce que l'homopolymère et le copolymère de fluorure de vinylidène ont un degré de polymerisation de $\eta inh=0,5$ à 2,0.

5. Composition suivant les revendications 1 à 4, caractérisée en ce que les fibres de titanate de potassium sont des fibres de tétratitanate de potassium, d'hexatitanate de potassium et/ou d'octatitanate de potassium.